Europäisches Patentamt

European Patent Office

Office européen des brevets

(11) Veröffentlichungsnummer: **0 147 583**
**B1**

(12) **EUROPÄISCHE PATENTSCHRIFT**

(45) Veröffentlichungstag der Patentschrift:
**01.03.89**

(51) Int. Cl.⁴: **B 29 C 47/02,** B 29 C 47/20,
B 60 S 1/38

(21) Anmeldenummer: **84113412.5**

(22) Anmeldetag: **07.11.84**

(54) Spritzvorrichtung zur Herstellung eines Scheibenwischergummiprofiles.

(30) Priorität: **23.12.83 CH 6922/83**

(43) Veröffentlichungstag der Anmeldung:
**10.07.85 Patentblatt 85/28**

(45) Bekanntmachung des Hinweises auf die Patenterteilung:
**01.03.89 Patentblatt 89/9**

(84) Benannte Vertragsstaaten:
**AT BE CH DE FR GB IT LI LU NL SE**

(56) Entgegenhaltungen:
**US-A- 2 683 897**
**US-A- 3 409 930**
**US-A- 3 428 997**
**US-A- 3 541 629**
**US-A- 3 744 947**

(73) Patentinhaber: **Schiesser, Walter A., Hohstrass 6,
CH-8302 Kloten (CH)**

(72) Erfinder: **Schiesser, Walter A., Hohstrass 6,
CH-8302 Kloten (CH)**

(74) Vertreter: **Blum, Rudolf Emil Ernst et al, c/o E. Blum &
Co Patentanwälte Vorderberg 11, CH-8044 Zürich (CH)**

**Beschreibung**

Die Erfindung betrifft eine Spritzvorrichtung zur Herstellung eines Scheibenwischergummiprofils nach dem Oberbegriff des Patentanspruches 1.

Bei der Herstellung solcher Profile ergeben sich gewisse Schwierigkeiten. Insbesondere wurde ein Weg gesucht, das aufwendige Zusammensetzen von fertigem Gummiprofil mit dem Trägerband zu vermeiden.

Weiter werden an die mit der zu wischenden Scheibe in Kontakt stehende Gummilippe des Gummiprofils hohe Anforderungen gestellt; kleinste Unregelmäßigkeiten der Lippenkanten führen zur Schlierenbildung auf der Scheibe. Entsprechend aufwendig gestaltet sich die Herstellung des Gummiprofils.

Die US-A-3 744 947 zeigt eine Spritzvorrichtung zum Herstellen von Scheibenwischergummiprofilen, mit welcher den oben beschriebenen Nachteilen begegnet werden soll. Offenbart ist ein Spritzkopf, mit welchem ein Doppelprofil extrudiert werden kann, welches direkt eingegossene Trägerbänder besitzt und dessen Einzelprofile an den Scheibenwischerlippen zusammenhängen.

Auch bei Preßverfahren wie z.B. den Transferpreß- oder Kompressionspreßverfahren werden die Scheibenwischerprofile als Doppelprofil hergestellt. Der Rohling wird dann der Länge nach mit Hilfe von Schneidstanzen oder Rundmessern getrennt.

Beim Trennen der oben genannten Doppelprofile werden die auf der Windschutzscheibe anliegenden Kanten der Wischerlippe erzeugt. Da der Schnitt am bereits vulkanisierten und somit sehr zähen Produkt ausgeführt wird, unterliegen die Schneidmesser einem beträchtlichen Verschleiß. Zudem ist zu erwähnen, daß das Doppelprofil an den eingegossenen Trägerbändern geführt und über ein Messer gezogen, sich im Schnittbereich elastisch verzieht und deshalb ein ganz gerader Schnitt (für ein Erzeugnis höchster Qualität) kaum zu erreichen ist.

Es kann zwar versucht werden, die Spritzvorrichtung nach der US-A-3 744 947 für die Herstellung eines einfachen Profils zu verwenden. Damit könnte der aufwendige und verschleißanfällige Schneidvorgang sowie die Gefahr eines unsauberen Schnitts entfallen.

Bei der Extrusion eines solch einfachen Profils mußte jedoch immer wieder ein Verzug des ausgestoßenen Gummiprofils festgestellt werden. Ein Schneidvorgang zur Erzeugung von geraden Lippenkanten ist also unerläßlich und konnte nicht eingespart werden.

Das ausgestoßene Gummiprofil verzieht sich aus folgendem Grund: Die Extrusionsmasse muß in der Spritzscheibe dem asymmetrischen Profil entsprechend verteilt und das einzuarbeitende Trägerband vollständig umflossen werden. Dabei entstehen Strömungsunterschiede und Turbulenzen, welche bewirken, daß das Trägerband mit verschiedenen Drücken beaufschlagt und Profilteile mit verschiedener Geschwindigkeit aus der Form ausgestoßen werden. Es resultiert ein gewisser Verzug des Profils nach der Spritzscheibe; das verzogene Profil wird vulkanisiert und damit der Verzug als Profilform festgelegt. Die so erhaltene Wischerlippe weist nicht mehr die geforderte Qualität auf.

Da beim Doppelprofil so oder so geschnitten werden muß, spielt der dort auftretende Verzug keine spezielle Rolle.

Die US-A-2 683 897 offenbart eine Spritzvorrichtung, die verbesserte Flußbedingungen für die Extrusionsmasse ermöglicht. Dabei wird die Durchflußgeschwindigkeit der Extrusionsmasse in Profilabschnitten mit großem Querschnitt durch Turbulenzen erzeugende Verengungen auf dem Niveau von Profilabschnitten mit kleinem Querschnitt gehalten. Auf diese Weise kann ein Profil über seinen gesamten Querschnitt recht gleichmäßig ausgestoßen werden. Bei der offenbarten Spritzvorrichtung ist aber nicht vorgesehen, ein Trägerband einzuarbeiten. Bei solchen konventionellen Spritzvorrichtungen, bei welchen ein Trägerband in das Profil eingearbeitet werden kann, ist die Ausstoßöffnung in der Spritzscheibe dem zu extrudierenden Profil nachgebildet. Die Führungen für das Trägerband enden kurz vor der Spritzscheibe; in diesem Bereich fließt das Gummimaterial mit dem Trägerband zusammen. Vor der Spritzscheibe baut sich nun ein Staudruck auf (welcher bei nicht vollständig symmetrischen Profilen wesentliche Größe erreicht) und in Verbindung mit Turbulenzen bewirkt, daß Gummimaterial rückwärts in die Führung für das Trägerband gedrückt wird. Damit kann das Trägerband in der Führung blockiert werden. Bei konventionellen Spritzvorrichtungen wird dadurch Abhilfe geschaffen, daß das Trägerband (und damit das Profil) mit erhöhter Geschwindigkeit von außen aus der Spritzvorrichtung abgezogen wird.

Da nun beim vorliegenden Profil die Öffnungen im Trägerband zuverlässig gefüllt werden müssen, darf die Abziehgeschwindigkeit nicht zu hoch angesetzt werden; damit besteht wiederum die Gefahr, daß ein Blockieren eintritt.

Zweck der vorliegenden Erfindung ist es nun, die vorerwähnten Nachteile zu vermeiden.

Es soll eine Spritzvorrichtung geschaffen werden, welche erlaubt, ein verzugsfreies Einzelprofil mit eingebautem Trägerband fortlaufend, d.h. ohne Blockierungsgefahr zu extrudieren, wobei das Profil auch ohne Nachbearbeitung zuverlässig hohen Qualitätsanforderungen entspricht.

Die entsprechende Spritzvorrichtung weist erfindungsgemäß die kennzeichnenden Merkmale vom Anspruch 1 auf. Bevorzugte Ausführungsformen werden in den Ansprüchen 2–4 angegeben.

Die Blockierungsgefahr wird dadurch vermieden, daß der die Führungsmittel für das Trägerband enthaltende Dorn in eine Ausnehmung der Spritzscheibe eingeführt ist. Die Extrusionsmasse muß, bevor sie das Trägerband erreicht, zuerst durch Durchgänge im Dorn hindurchfließen, wo Turbulenzen und Gebiete hohen Staudrucks in eine mindestens annähernd laminare Strömung unter normalem Staudruck übergeführt werden. Die Ursache für das Blockieren, nämlich gestörte Strömungsverhältnisse, werden somit im entscheidenden Gebiet vermieden.

Eine weitere Verwindung des Profils durch elastische Verformung des Trägerbandes aufgrund des Extrusionsdrucks von über 100 bar in der Spritzscheibe wird vermieden, indem das Trägerband in den folgenden zwei Etappen mit Extrusionsmaterial bedeckt wird:

Erstens: Bedecken der Oberseite des Trägerbandes mit Gummimaterial, während das Trägerband auf seiner Unterseite vollständig durch Aufliegen im Durchgang des Dornes gestützt ist.

Zweitens: Bedecken der Unterseite des Trägerbandes mit weiterem Gummimaterial, während die Oberseite des Trägerbandes durch das bereits aufgebrachte Gummimaterial gestützt ist. Damit ist das Trägerband während des ganzen Extrusionsvorganges vollständig vor Durchbiegung geschützt. Das fertige Profil, welches die Spritzscheibe verläßt, ist vollkommen gerade und ohne innere Spannungen ausgebildet; es verformt sich nicht mehr.

Die Erfindung wird nachstehend anhand eines in der Zeichnung dargestellten Ausführungsbeispiels näher erläutert.

Es zeigen:

Fig. 1 einen Querschnitt durch ein mit einer erfindungsgemäßen Spritzvorrichtung hergestelltes Scheibenwischergummiprofil,

Fig. 2 eine Ansicht der dem Spritzkopf abgewandten Seite der Spritzscheibe,

Fig. 3 eine Ansicht der dem Spritzkopf zugewandten Seite der Spritzscheibe,

Fig. 4 einen Längsschnitt durch den Spritzkopf,

Fig. 5 eine Ansicht der vorderen Stirnseite des Spritzkopfes, und

Fig. 6 einen Längsschnitt durch den vorderen Teil der Spritzvorrichtung.

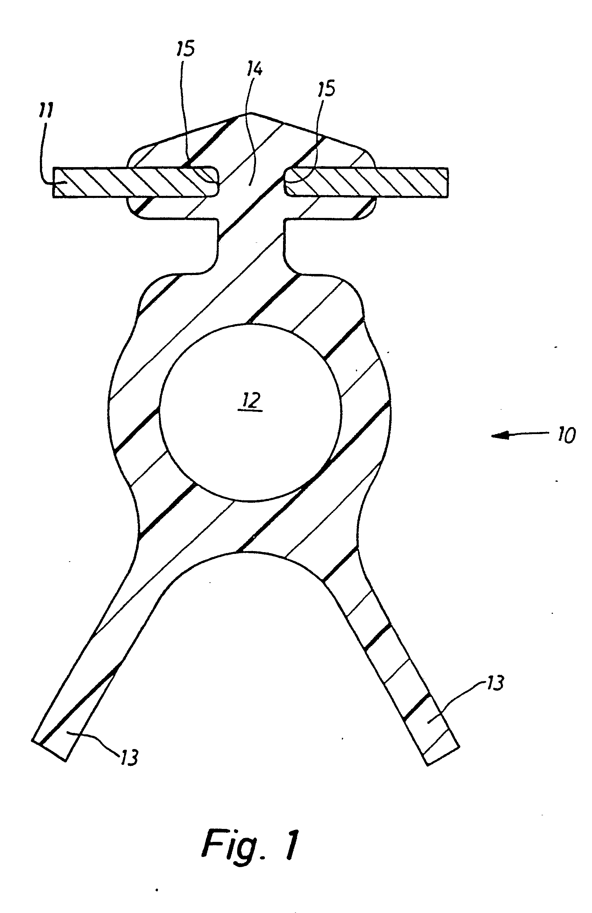

Figur 1 zeigt einen Querschnitt durch ein erfindungsgemäß hergestelltes Scheibenwischergummiprofil 10 mit einem eingearbeiteten, federelastischen Trägerband 11, einem Hohlraum 12, Wischerlippen 13 und einem Profilfuß 14. Das Trägerband 11 weist Öffnungen mit Randbereichen 15 auf; mit deren Hilfe wird die Verbindung des Profilfußes 14 mit dem Trägerband 11 ermöglicht.

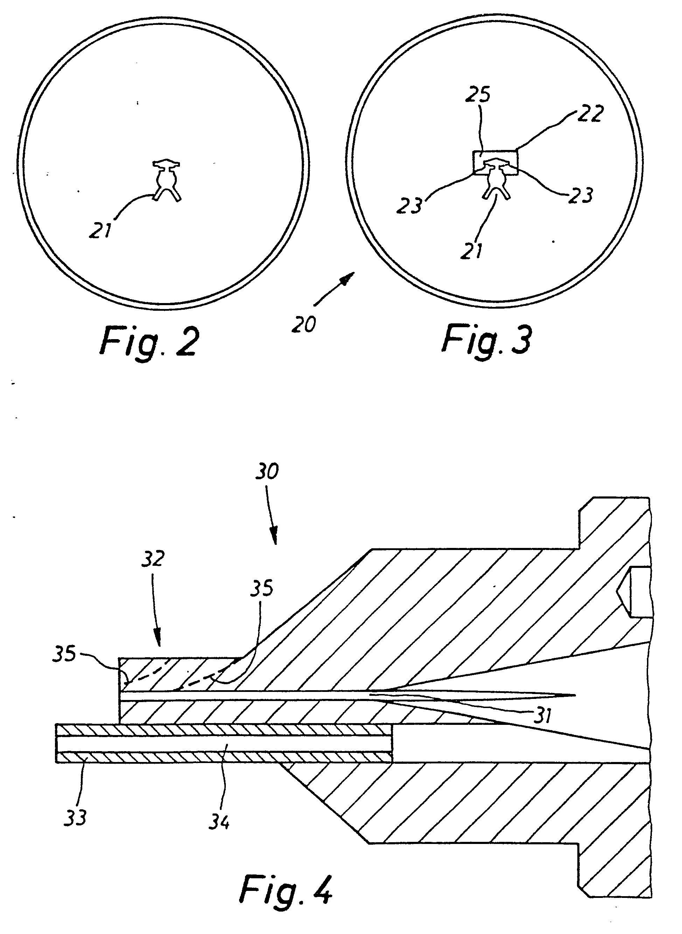

Figur 2 zeigt die Spritzscheibe 20 von der Außenseite der Vorrichtung her gesehen. Die dem Gesamtprofil entsprechende Spritzöffnung ist mit 21 bezeichnet.

Figur 3 zeigt die Spritzscheibe 20 von der dem Spritzkopf 30 zugewandten Seite her gesehen. Ersichtlich ist die Spritzöffnung 21 und eine zur Aufnahme des Spritzkopfvorderteils vorhandene Ausnehmung 22 mit ihrer Grundfläche 25. Das Trägerband 11 wird entlang seiner Längsseiten durch die Bereiche 23 der Spritzöffnung 21 hindurchgeführt; sie umfassen Zonen der Längsseiten des Trägerbandes 11 derart eng, daß kein plastifiziertes Gummimaterial auf letztere gelangen kann.

Figur 4 zeigt einen Längsschnitt durch den vorderen Teil des mit der Spritzscheibe 20 zusammenwirkenden Spritzkopfes 30. Er weist einen ersten Durchgang 31 für das Trägerband 11, einen in die Ausnehmung 22 der Spritzscheibe 20 eingreifenden Dorn 32 und einen zur Bildung des Hohlraumes 12 im Scheibenwischergummiprofil 10 dienenden Zusatzdorn 33 auf. Dieser Zusatzdorn enthält eine Bohrung 34, damit während der Extrusion Luft dem Hohlraum 12 des Profils 10 zugeführt werden kann. Seitlich im Dorn 32 angeordnet verlaufen, durch gestrichelte Linien angedeutet, zweite Zuführkanäle 35 für plastifiziertes Gummimaterial.

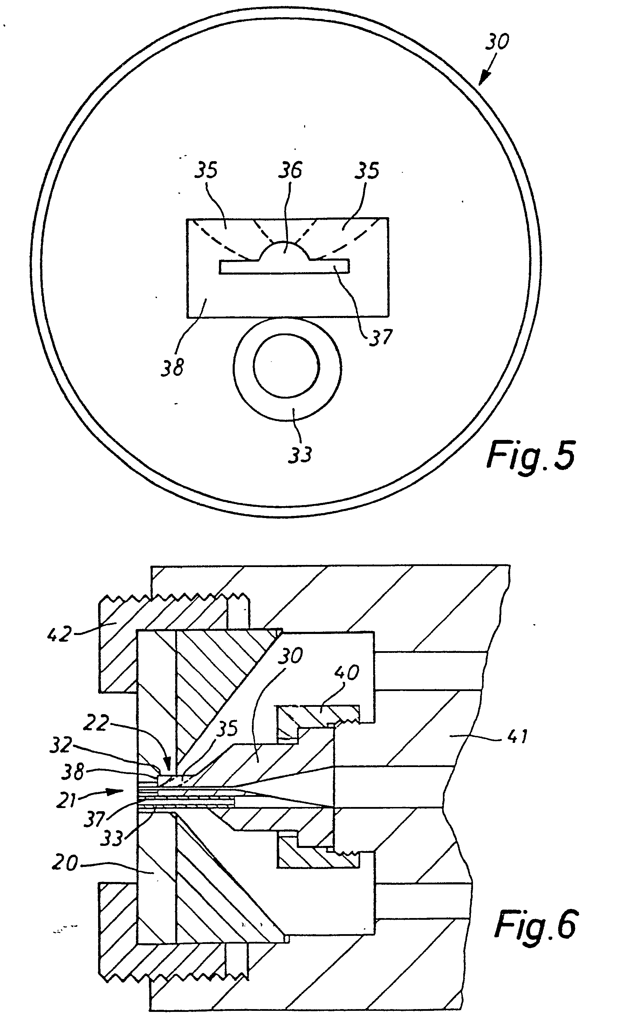

Figur 5 zeigt eine Ansicht des Spritzkopfes 30 von vorne. Ersichtlich ist die vordere Stirnfläche 38 des Dornes 32 mit der gemeinsamen Mündung der zweiten Zuführkanäle 35 und des dritten Zufuhrkanals 36. Weiter ist die Öffnung 37 des ersten Durchgangs 31 für das Trägerband 11 sowie der Zusatzdorn 33 dargestellt.

Figur 6 zeigt einen Längsschnitt durch die Spritzscheibe 20 und den Spritzkopf 30 in zusammengefügtem betriebsfähigen Zustand. Der Spritzkopf 30 und die Spritzscheibe 20 sind mit Hilfe von Überwurfmuttern 40 und 42 so festgelegt, daß der Dorn 32 derart in die entsprechende Ausnehmung 22 der Spritzscheibe 20 eingreift, daß die Stirnfläche 38 des Dornes 32 mit der Grundfläche der Ausnehmung 22 für das plastifizierte Gummimaterial dichtend zusammenwirkt. Damit ist gewährleistet, daß kein Gummimaterial auf freizubleibende Zonen an den betreffenden oberen Längsseiten des Trägerbandes 11 gelangt. Auf die zu bedeckenden Unterseiten des Trägerbandes 11 gelangt das Gummimaterial durch Umfließen des Zusatzdornes 33.

In den Durchgängen 35 und 36 strömt das Gummimaterial laminar auf die obere Seite des Trägerbandes. Dabei liegt die untere Seite des Trägerbandes 11 auf der Mantelfläche des ersten Durchganges 31 auf und ist gegenüber der Druckbelastung durch das Gummimaterial abgestützt.

Zudem wird durch das laminar strömende, keine lokalen Druckspitzen aufweisende Gummimaterial bewirkt, daß die Tendenz des an sich unter hohem Druck stehenden Gummimaterials entfällt, rückwärts in den ersten Durchgang 31 einzudringen und das Trägerband dort zu verklemmen und damit zu blockieren.

Nach Verlassen der Spitze des Dornes 32 ist das Trägerband 11 auf seiner oberen Seite abgestützt; es kann jetzt auf seiner unteren Seite mit Gummimaterial bedeckt werden.

Der vorerwähnte Ablauf der Herstellung wird dadurch erzielt, daß der Dorn 32 in die Spritzscheibe 20 hineinragt und an seinem Ausgang bereits einen Teil des Scheibenwischergummiprofils bildet. Dadurch wird die eine Deformierung des Trägerbandes vermeidende, zweistufige Bedeckung des Bandes ermöglicht. Durch die gleichzeitige Benutzung der zweiten Kanäle 35 zum Durchlassen von Gummimaterial ist der Turbulenzbereich im Gummimaterial vom Ort der Profilbildung weg gegen die Flußrichtung nach hinten an einen für einwandfreies Nachführen des Trägerbandes ungefährlichen Ort verlegt worden.

## Patentansprüche

1. Spritzvorrichtung zur Herstellung eines Scheibenwischergummiprofils, mit einem Spritzkopf (30), einer Spritzscheibe (20) und mit Führungsmitteln für die Zufuhr von zu extrudierendem, plastifiziertem Gummimaterial und dem in das Gummimaterial einzuarbeitendem Trägerband (11), dadurch gekennzeichnet, daß die Führungsmittel einen Dorn (32) mit einem dem zuzuführenden Trägerband (11) entsprechenden ersten Durchgang (31) sowie zweite Durchgänge (35) für Zuleitung von Gummimaterial in die Spritzscheibe (20) aufweisen, und daß die Spritzscheibe (20) an ihrer Außenseite eine entsprechend dem herzustellenden Gesamtprofil ausgebildete Spritzöffnung (21) und an ihrer Innenseite am Ort der Spritzöffnung (21) eine dem vorderen Ende des Dornes (32) nachgebildete Ausnehmung (22) für Aufnahme der Dornspitze aufweist, derart, daß der Dorn für Gummimaterial dichtend in der Ausnehmung (22) der Spritzscheibe (20) eingepaßt ist.

2. Spritzvorrichtung nach Anspruch 1, dadurch gekennzeichnet, daß der erste Durchgang (31) eine durchgehende, untere Auflagefläche für die untere Seite des Trägerbandes (11) bildet und die zweiten Durchgänge (35) derart in den ersten Durchgang (31) münden, daß Gummimaterial schräg von oben spitzwinklig gegen die untere Auflagefläche des ersten Durchganges (31) geführt ist.

3. Spritzvorrichtung nach Anspruch 1, dadurch gekennzeichnet, daß zwischen dem Dorn (32) und der Spritzöffnung (21) ein dritter Durchgang (36) für Zuleitung von Gummimaterial vorhanden ist, welcher in Flußrichtung des Gummimaterials hinter den Mündungen der zweiten Durchgänge (35) direkt in die Spritzscheibe (20) mündet.

4. Spritzvorrichtung nach Anspruch 1, dadurch gekennzeichnet, daß an der Spitze des Dornes (32) ein Zusatzdorn (33) zur Bildung eines Hohlraums (12) im Scheibenwischergummiprofil vorhanden ist und in die Spritzöffnung (21) der Spritzscheibe (20) ragt.

## Claims

1. An extrusion device, for producing a windscreen-wiper rubber profile, with an extrusion head (39), an extrusion die (20) and with guide means for the supply of plasticized rubber material that is to be extruded and the supporting strip (11) that is to be worked into the rubber material, characterised in that the guide means have a mandrel (32) with a first passage (31) corresponding to the supporting strip (11) that is to be supplied as well as second passages (35) for supplying rubber material into the extrusion die (20), and in that the extrusion die (20) has on its outside an extrusion opening (21) designed in accordance with the overall profile that is to be produced and has on its inside at the location of the extrusion opening (21) a recess (22), corresponding to the front end of the mandrel (32), for the reception of the mandrel tip, in such a way that the mandrel for rubber material is fitted in sealing manner in the recess (22) of the extrusion die (20).

2. An extrusion device according to claim 1, characterised in that the first passage (31) forms a continuous lower bearing surface for the lower side of the supporting strip (11) and the second passages (35) open in such a way into the first passage (31) that rubber material is conducted obliquely from above at an acute angle towards the lower bearing surface of the first passage (31).

3. An extrusion device according to claim 1, characterised in that present between the mandrel (32) and the extrusion opening (21) is a third passage (36) for supplying rubber material which in the direction of flow of the rubber material behind the mouths of the second passages (35) opens directly into the extrusion die (20).

4. An extrusion device according to claim 1, characterised in that an auxiliary mandrel (33) for the formation of a cavity (12) in the windscreen-wiper rubber profile is present at the tip of the mandrel (32) and protrudes into the extrusion opening (21) of the extrusion die (20).

## Revendications

1. Dispositif d'injection pour la fabrication d'une lame de caoutchouc d'essuie-glace, avec une tête d'injection (30), un plateau d'injection (20) et avec des moyens de guidage pour l'amenée de matière de caoutchouc plastifiée à extruder et de la bande porteuse (11) à incorporer dans la matière de caoutchouc, caractérisé en ce que les moyens de guidage comportent une broche (32) avec un premier passage (31) correspondant à la bande porteuse (11) à amener, ainsi que de deuxièmes passages (35) pour l'amenée de matière de caoutchouc dans le plateau d'injection (20), et en ce que le plateau d'injection (20) présente, de son côté extérieur, une ouverture d'injection (21) réalisée de façon correspondant à la totalité de la lame à fabriquer, et, à son côté intérieur, à l'endroit de l'ouverture d'injection (21), un logement (22) conformé suivant l'extrémité avant de la broche (32) pour recevoir la pointe de la broche, de telle sorte que la broche pour la matière de caoutchouc est engagée de manière étanche dans le logement (22) du plateau d'injection (20).

2. Dispositif d'injection suivant la revendication 1, caractérisé en ce que le premier passage (31) forme une surface d'appui inférieure continue pour la face inférieure de la bande porteuse (11), et en ce que les deuxièmes passages (35) débouchent dans le premier passage (31), de telle sorte que la matière de caoutchouc est amenée d'en haut, suivant un angle aigu, contre la surface d'appui inférieure du premier passage (31).

3. Dispositif d'injection suivant la revendication 1, caractérisé en ce qu'entre la broche (32) et l'ouverture d'injection (21), il existe un troisième passage (36) pour l'amenée de matière de caoutchouc, lequel débouche directement dans le plateau d'injection (20), dans le sens d'écoulement de la matière de caoutchouc, derrière les embouchures des deuxièmes passages (35).

4. Dispositif d'injection suivant la revendication 1, caractérisé en ce qu'il y a, à la pointe de la broche (32), une broche supplémentaire (33) pour former un espace creux (12) dans la lame de caoutchouc d'essuie-glace, laquelle broche supplémentaire arrive dans l'ouverture d'injection (21) du plateau d'injection (20).

*Fig. 1*

Fig. 2

Fig. 3

Fig. 4

*Fig.5*

30

35   36   35

38

37

33

*Fig.6*

42

30

40

22

32

38

21

37

33

20

35

41